# EUROPÄISCHE PATENTSCHRIFT

(11) **EP 2 244 090 B1**
(45) Veröffentlichungstag und Bekanntmachung des Hinweises auf die Patenterteilung: **23.03.2016**
(21) Anmeldenummer: 10004218.3
(22) Anmeldetag: 21.04.2010
(51) Int. Cl.: G01N 27/414

(54) **Vorrichtung zur Detektion eines Gases oder Gasgemischs und Verfahren zum Herstellen einer solchen**
Device for detecting a gas or gas mixture and method for producing same
Dispositif de détection d'un gaz ou d'un mélange de gaz et procédé de fabrication de celui-ci

(30) Priorität: 23.04.2009 DE 102009018364
(43) Veröffentlichungstag der Anmeldung: 27.10.2010
(73) Patentinhaber: Micronas GmbH, 79108 Freiburg (DE)
(72) Erfinder: Wilbertz, Christoph, Dr., 79194 Gundelfingen (DE); Frerichs, Heinz-Peter, Dr., 79271 St. Peter (DE); Freund, Ingo, Dipl.-Ing. (FH), 79117 Freiburg (DE)
(74) Vertreter: Koch, Bertram

(56) Entgegenhaltungen:
- EP-A1- 2 006 668
- EP-A2- 1 059 528
- WO-A1-03/050525
- WO-A1-2005/093399

## Beschreibung

Die Erfindung betrifft eine Vorrichtung zur Detektion eines Gases oder Gasgemischs, mit einem ersten und einem zweiten Gassensor, wobei der erste Gassensor ein MOSFET ist, der eine erste Source, eine erste Drain, einen zwischen diesen befindlichen ersten Kanalbereich und eine kapazitiv an den ersten Kanalbereich gekoppelte erste gassensitive Schicht aufweist, die Palladium enthält und mit einer Änderung ihrer Austrittsarbeit auf eine Änderung der Konzentration des zu detektierenden Gases reagiert, wobei der zweite Gassensor in einem Halbleitersubstrat eine zweite Source, eine zweite Drain und zwischen diesen einen zweiten Kanalbereich hat, der über einen Luftspalt kapazitiv an ein Suspended Gate gekoppelt ist, das eine zweite gassensitive Schicht aufweist, die mit einer Änderung ihrer Austrittsarbeit auf eine Änderung der Konzentration des zu detektierenden Gases reagiert, wobei die zweite gassensitive Schicht an einer Trägerschicht angeordnet und dem Luftspalt zugewandt ist. Außerdem betrifft die Erfindung ein Verfahren zum Herstellen einer Vorrichtung zur Detektion eines Gases oder Gasgemischs.

Eine derartige Vorrichtung ist aus EP 1 620 717 B1 bekannt. Sie hat zwei unterschiedliche Arten von Gassensoren. Ein erster Gassensor ist als Suspended Gate Feldeffekttransistor (SGFET) ausgestaltet und ein zweiter Gassensor als sogenannter Lundström-FET.

Der Lundström-FET hat eine erste Transistorwanne eines ersten Ladungsträgertyps, die in das Halbleitersubstrat eines Halbleiterchips integriert ist. In die erste Transistorwanne sind eine erste Source und eine erste Drain eingelassen, die mit Ladungsträgern eines zweiten Ladungsträgertyps dotiert sind. Zwischen der ersten Source und der ersten Drain ist ein erster Kanalbereich gebildet, auf dem eine dielektrische Schicht angeordnet ist. Die dielektrische Schicht ist mit einer ersten gassensitiven Schicht beschichtet, die Palladium enthält und auf eine Änderung der Konzentration des zu detektierenden Gases mit einer Änderung ihrer Austrittsarbeit reagiert. Diese Änderung beeinflusst über den ersten Kanalbereich einen zwischen der ersten Source und der ersten Drain fließenden ersten Strom.

Der SGFET hat eine zweite Transistorwanne des ersten Ladungsträgertyps, die neben der ersten Transistorwanne mit seitlichem Abstand zu dieser monolithisch in das Halbleitersubstrat integriert ist. In die zweite Transistorwanne sind eine zweite Source und eine zweite Drain eingelassen, die mit Ladungsträgern des zweiten Ladungsträgertyps dotiert sind. Zwischen der zweiten Source und der zweiten Drain ist ein zweiter Kanalbereich gebildet, der über einen Luftspalt kapazitiv an ein Suspended Gate gekoppelt. Das Suspended Gate ist an einer den zweiten Kanalbereich überbrückenden Trägerschicht angeordnet und weist eine dem zweiten Kanalbereich zugewandte zweite gassensitive Schicht auf. Die zweite gassensitive Schicht enthält Palladium und/oder Platin und reagiert auf eine Änderung der Konzentration des zu detektierenden Gases mit einer Änderung ihrer Austrittsarbeit. Diese Änderung beeinflusst über den zweiten Kanalbereich einen zwischen der zweiten Source und der zweiten Drain fließenden zweiten Strom.

Der SGFET und der Lundström-FET sind mit einer in das Halbleitersubstrat integrierten Auswerteeinrichtung verbunden, welche die zur Detektion des Gases oder Gasgemischs die Messsignale beider Arten von Gassensoren auswertet. Die Vorrichtung hat sich in der Praxis vor allem deshalb als vorteilhaft erwiesen, weil der Lundström-FET und der SGFET unterschiedliche Detektionseigenschaften für Gase haben, und weil durch die Auswertung der Messsignale beider Arten von Gassensoren das Gas oder Gasgemisch mit einer wesentlich größeren Genauigkeit detektiert werden kann als mit einer Vorrichtung, die nur ein Art von Gassensoren aufweist.

Ein Nachteil der Vorrichtung besteht jedoch noch darin, dass unter bestimmten Betriebsbedingungen, insbesondere bei der Messung sehr hoher Gaskonzentrationen, bei hoher Temperatur und hoher Luftfeuchtigkeit eine irreversible Veränderung des SGFET auftreten kann. Durch diese Veränderung kann die Messgenauigkeit der Vorrichtung abnehmen. Ungünstig ist außerdem, dass die Vorrichtung gegenüber einer Vorrichtung, die nur einen einzigen Gassensor aufweist, eine relativ große Chipfläche aufweist. Die Herstellung der Vorrichtung ist daher mit entsprechenden Kosten verbunden.

Es besteht deshalb die Aufgabe, eine Vorrichtung der eingangs genannten Art zu schaffen, die kompakte Abmessungen ermöglicht und bei der eine irreversible Veränderung des SGFET weitestgehend vermieden wird. Außerdem besteht die Aufgabe, ein Verfahren zum Herstellen einer Vorrichtung zur Detektion eines Gases oder Gasgemischs anzugeben, die kompakte Abmessungen ermöglicht und bei der eine irreversible Veränderung des SGFET weitestgehend vermieden wird.

Diese Aufgabe wird bezüglich des Verfahrens dadurch gelöst,
- dass ein erster Halbleiterchip hergestellt wird, indem
   - ein erstes Halbleitersubstrat bereitgestellt wird,
   - an der Vorderseite des ersten Halbleitersubstrats eine erste Drain, eine erste Source, ein dazwischen befindlicher erster Kanalbereich und eine erste gassensitive Schicht gebildet werden, die Palladium enthält und mit einer Änderung ihrer Austrittsarbeit auf eine Änderung der Konzentration des zu detektierenden Gases reagiert,
   - wobei der erste Kanalbereich und die erste gassensitive Schicht derart angeordnet werden, dass die erste gassensitive Schicht kapazitiv an den ersten Kanalbereich gekoppelt ist,
   - die Rückseite des ersten Halbleitersubstrats mit einer zweiten gassensitiven Schicht beschichtet wird, die mit einer Änderung ihrer Austrittsarbeit auf eine Änderung der Konzentration des zu detektierenden Gases reagiert,
- dass ein zweiter Halbleiterchip hergestellt wird, indem
   - ein zweites Halbleitersubstrat bereitgestellt wird,
   - auf dem eine zweite Drain, eine zweite Source und ein dazwischen befindlicher zweiter Kanalbereich gebildet werden,
   dass der erste Halbleiterchip und der zweite Halbleiterchip derart relativ zueinander positioniert werden, dass die zweite gassensitive Schicht dem zweiten Kanalbereich zugewandt und über einen Luftspalt kapazitiv an diesen gekoppelt ist, und dass der erste Halbleiterchip und der zweite Halbleiterchip in dieser Lage relativ zueinander fixiert werden.

Der Erfindung liegt die Erkenntnis zu Grunde, dass bei der Integration beider Gassensoren in den selben Halbleiterchip bei den für die Herstellung des ersten Gassensors (Lundström-FET) erforderlichen Prozessschritten, insbesondere beim Aufbringen und/oder Strukturieren der das Palladium enthaltenden ersten gassensitiven Schicht, auch die Chipoberfläche im Bereich des zweiten Gassensors (SGFET) verändert wird. Durch diese Veränderung der Chipoberfläche kann der zweite Gassensor irreversibel geschädigt werden, wenn er bestimmten Betriebszuständen ausgesetzt ist, insbesondere einer sehr hohen Gaskonzentration, einer hohen Temperatur und einer hohen Luftfeuchtigkeit. Erfindungsgemäß wird dies dadurch vermieden, dass die der erste Gassensor einerseits und die zweite Drain, die zweite Source und der zweiter Kanalbereich andererseits auf voneinander getrennten Halbleiterchips bzw. Halbleitersubstraten hergestellt werden, und dass die Halbleiterchips erst danach miteinander verbunden werden.

Diese vorstehend genannte Aufgabe wird Aufgabe wird bezüglich des Verfahrens auch dadurch gelöst,
- dass ein erster Halbleiterchip hergestellt wird, indem
   - ein erstes Halbleitersubstrat bereitgestellt wird,
   - an der Vorderseite des ersten Halbleitersubstrats eine erste Drain, eine erste Source, ein dazwischen befindlicher erster Kanalbereich und eine erste gassensitive Schicht gebildet werden, die Palladium enthält und mit einer Änderung ihrer Austrittsarbeit auf eine Änderung der Konzentration des zu detektierenden Gases reagiert,
   - wobei der erste Kanalbereich und die erste gassensitive Schicht derart angeordnet werden, dass die erste gassensitive Schicht kapazitiv an den ersten Kanalbereich gekoppelt ist,
   - die Rückseite des ersten Halbleitersubstrats mit einer zweiten gassensitiven Schicht beschichtet wird, die mit einer Änderung ihrer Austrittsarbeit auf eine Änderung der Konzentration des zu detektierenden Gases reagiert,
- wobei ein zweiter Halbleiterchip hergestellt wird, indem
   - ein zweites Halbleitersubstrat bereitgestellt wird,
   - auf dem eine zweite Drain, eine zweite Source und ein dazwischen befindlicher zweiter Kanalbereich gebildet werden,
   - auf diesem eine kapazitiv an den zweiten Kanalbereich gekoppelte, gegen den zweiten Kanalbereich elektrisch isolierte Gateelektrode und eine von der Gateelektrode seitlich beabstandete Sensorelektrode gebildet werden, die elektrisch mit der Gateelektrode verbunden wird,
dass der erste Halbleiterchip und der zweite Halbleiterchip derart relativ zueinander positioniert werden, dass die zweite gassensitive Schicht der Sensorelektrode zugewandt und über einen Luftspalt kapazitiv an diese gekoppelt ist, und dass der erste Halbleiterchip und der zweite Halbleiterchip in dieser Lage relativ zueinander fixiert werden.

Der zweite Kanalbereich kann also auch indirekt über die Gateelektrode und die damit verbundene Sensorelektrode kapazitiv über den Luftspalt an die zweite gassensitive Schicht gekoppelt werden (CCFET). Dadurch ist es möglich, den zweiten Kanalbereich seitlich neben der zweiten gassensitiven Schicht anzuordnen.

Bei einer bevorzugten Ausfuhrungsform der Erfindung wird das erste Halbleitersubstrat ganzflächig mit dem das Palladium enthaltenden Werkstoff der ersten gassensitiven Schicht beschichtet und danach wird der Werkstoff an Stellen, an denen die erste gassensitive Schicht nicht sein soll, von der Oberfläche des ersten Halbleitersubstrats entfernt. Die erste gassensitive Schicht kann dadurch kostengünstig strukturiert werden.

Vorteilhaft ist, wenn vor dem Beschichten des ersten Halbleitersubstrats mit der ersten gassensitiven Schicht auf dem ersten Kanalbereich eine Struktur erzeugt wird, an welcher der Werkstoff der ersten gassensitiven Schicht besser haftet als an einem Oberflächenbereich des ersten Halbleitersubstrats, der diese Struktur nicht aufweist, und wenn nach dem Beschichten des ersten Halbleitersubstrats mit dem Werkstoff dieser in dem die Struktur nicht aufweisenden Oberflächenbereich von dem Oberflächenbereich entfernt wird. Dabei kann das Entfernen des Werkstoffs auf einfache Weise mit Hilfe von Ultraschall erfolgen. Gegebenenfalls kann der Werkstoff vor und/oder während der Ultraschallbehandlung durch Inkontaktbringen mit Wasserstoff verspannt werden, damit er sich an den Stellen, an denen die erst gassensitive Schicht nicht sein soll, besser von dem ersten Halbleitersubstrat ablöst.

Bei einer Weiterbildung der Erfindung wird nach dem Beschichten des ersten Halbleitersubstrats mit der ersten gassensitiven Schicht an der Rückseite des ersten Halbleitersubstrats flächig Material abgetragen, und danach wird die Rückseite mit der zweiten gassensitiven Schicht beschichtet. Durch den flächigen Materialabtrag können eventuelle Rückstände, insbesondere Palladium-Rückstände, die beim Herstellen des Lundström-FET an die Rückseite des ersten Halbleitersubstrats gelangen können, vollständig entfernt werden, so dass sie nicht mit der zweiten gassensitiven in Kontakt geraten können. Das flächige Abtragen des Materials erfolgt bevorzugt durch Rückseitenschleifen des ersten Halbleitersubstrats.

Bei einer bevorzugten Ausgestaltung der Erfindung wird in das zweite Halbleitersubstrat eine Auswerteeinrichtung integriert, die über Bondrähte oder dergleichen elektrische Verbindungen mit der ersten Drain und/oder der ersten Source sowie über Leiterbahnen mit der zweiten Drain und/oder der zweiten Source verbunden wird. Die Vorrichtung ist dann noch kostengünstiger mit kompakten Abmessungen herstellbar. Gegebenenfalls ist es sogar möglich, dass zusätzlich zu der in das zweite Halbleitersubstrat integrierten Auswerteeinrichtung eine weitere Auswerteeinrichtung in das erste Halbleitersubstrat integriert wird, und dass die zuerst genannte Auswerteeinrichtung mit der weiteren Auswerteeinrichtung zusammenwirkt. Dabei kann die in das zweite Halbleitersubstrat integrierte Auswerteeinrichtung auch indirekt über die in das erste Halbleitersubstrat integrierte Auswerteeinrichtung mit der ersten Drain und/oder der ersten Source verbunden sein.

Vorteilhaft ist, wenn eine Vielzahl der ersten Halbleiterchips auf einem ersten Wafer erzeugt und die ersten Halbleiterchips danach vereinzelt werden, wenn eine Vielzahl der zweiten Halbleiterchips auf einem zweiten Wafer erzeugt und die zweiten Halbleiterchips danach vereinzelt werden, und wenn die ersten Halbleiterchips und die zweiten Halbleiterchips danach jeweils relativ zueinander positioniert und miteinander verbunden werden. Die Vorrichtung kann dadurch kostengünstig in Serienfertigung hergestellt werden. Das Vereinzeln der Halbleiterchips kann durch Sägen erfolgen.

Bei einer bevorzugten Ausgestaltung der Erfindung wird auf dem ersten Halbleitersubstrat mindestens ein elektrisches Heizelement und/oder wenigstens ein Temperatursensor integriert. Des Heizelement und/oder der Temperatursensor können dann praktisch ohne zusätzlichen Aufwand hergestellt werden. Zum Beheizen der ersten gassensitiven Schicht braucht nur der erste, vorzugsweise kleinere Halbleiterchip beheizt zu werden. Gegenüber einer Vorrichtung, bei der das Heizelement in den zweiten Halbleiterchip integriert ist, kann dadurch Heizenergie eingespart werden.

Bezüglich der Vorrichtung wird die vorstehend genannte Aufgabe dadurch gelöst, dass die Trägerschicht durch ein weiteres Halbleitersubstrat gebildet ist, und dass der erste Gassensor in die dem Luftspalt abgewandte Vorderseite des zweiten Halbleitersubstrats integriert ist.

Die beiden Halbleitersubstrate, nämlich das für den ersten Gassensor und das für die die Drain, die Source, den Kanalbereich und ggf die Gateelektrode und die Sensorelektrode des zweiten Gassensors, sind also übereinander gestapelt. Die Vorrichtung ermöglicht dadurch sehr kompakte Abmessungen, die etwa denjenigen eines herkömmlichen SGFET oder CCFET entsprechen. Da der erste Gassensor auf einem anderen Substrat angeordnet ist als die Drain, die Source und der Kanalbereich des zweiten Gassensors, können die entsprechenden Halbleiterchips getrennt voneinander prozessiert werden. Dadurch wird vermieden, dass durch die Herstellung des den ersten Gassensor aufweisenden Halbleiterchips die Oberfläche des anderen Halbleiterchips verändert wird und/oder mit dem Palladium der ersten gassensitiven Schicht in Kontakt gerät.

Der zweite Gassensor kann als SGFET ausgestaltet sein, bei dem der Luftspalt zwischen dem zweiten Kanalbereich und der zweiten gassensitiven Schicht gebildet ist. Die zweite Drain, die zweite Source und der zweite Kanalbereich sind dabei bevorzugt unterhalb der Trägerschicht des Suspended Gates angeordnet.

Der zweite Gassensor kann aber auch ein CCFET sein, der eine auf dem zweiten Kanalbereich angeordnete Gateelektrode und eine seitlich davon beabstandete Sensorelektrode aufweist, die elektrisch mit der Gateelektrode verbunden ist, wobei der Luftspalt zwischen der Sensorelektrode und der zweiten gassensitiven Schicht gebildet ist. Die zweite Drain, die zweite Source, der zweite Kanalbereich und die Gateelektrode können dabei ggf. auch seitlich neben einem von der Trägerschicht des Suspended Gates überdeckten Teilbereich des zweiten Halbleitersubstrats angeordnet sein.

Bei einer bevorzugten Ausgestaltung der Erfindung können der erste Gassensor und der zweite Gassensor mit einer Auswerteeinrichtung verbunden sein, die derart ausgebildet ist, dass sie zur Detektion des Gases oder Gasgemischs die Messsignale des ersten Gassensors und des zweiten Gassensors auswertet, wobei die Auswerteeinrichtung vorzugsweise in das Halbleitersubstrat des zweiten Gassensors integriert ist. Die elektrische Verbindung zwischen dem ersten Gassensor und der Auswerteeinrichtung kann dabei über erste und zweite Leiterbahnen erfolgen, wobei die ersten Leiterbahnen mit an dem Halbleitersubstrat des ersten Gassensors angeordneten Anschlusskontakten und die zweiten Leiterbahnen mit an dem die zweite Drain, die zweite Source und den zweiten Kanalbereich aufnehmenden Halbleitersubstrat angeordneten Gegenkontakten verbunden sind. Die Gegenkontakte sind jeweils über einen Bonddraht mit einem ihnen zugeordneten Anschlusskontakt verbunden.

Das zu detektierend Gas ist bevorzugt Wasserstoffgas. Die Vorrichtung kann aber auch zum Messen von Ammoniak oder Stickstoffdioxid oder einem Gemisch aus den genannten Gasen verwendet werden.

Vorteilhaft ist, wenn in das weitere Halbleitersubstrat mindestens ein elektrisches Heizelement und/oder wenigstens ein Temperatursensor integriert wird. Zum Beheizen der ersten gassensitiven Schicht braucht dann nur der den ersten Gassensor aufweisende erste Halbleiterchip beheizt zu werden, der eine kleine Chipfläche aufweisen kann als der den zweiten Gassensor aufweisende zweite Halbleiterchip. Dadurch kann Heizenergie eingespart werden.

Die erste gassensitive Schicht kann aus Palladium und/oder Platin und/oder einer mindestens eines dieser Metalle enthaltenden Legierung bestehen.

Nachfolgend sind Ausführungsbeispiele der Erfindung anhand der Zeichnung näher erläutert:
- Fig. 1A bis 1E: Verfahrensschritte für die Herstellung eines ersten Halbleiterchips, wobei ein erstes Halbleitersubstrat jeweils im Querschnitt dargestellt ist,
- Fig. 2A bis 2C: Verfahrensschritte für die Herstellung eines zweiten Halbleiterchips für eine Vorrichtung, die einen Lundström-FET und einen SGFET aufweist, wobei ein zweites Halbleitersubstrat jeweils im Querschnitt dargestellt ist,
- Fig. 3: einen Querschnitt durch eine Vorrichtung zur Detektion eines Gases oder Gasgemischs, die einen Lundström-FET und einen SGFET aufweist,
- Fig. 4A bis 4D: Verfahrensschritte für die Herstellung eines zweiten Halbleiterchips für eine Vorrichtung, die einen Lundström-FET und einen CCFET aufweist, wobei ein zweites Halbleitersubstrat jeweils im Querschnitt dargestellt ist, und
- Fig. 5: einen Querschnitt durch eine Vorrichtung zur Detektion eines Gases oder Gasgemischs, die einen Lundström-FET und einen CCFET aufweist.

Bei einem Verfahren zum Herstellen einer Vorrichtung 1, die zur Detektion eines Gases oder Gasgemischs einen Lundström-FET 2 und einen SGFET 3 aufweist, werden zunächst ein erster Halbleiterchip 4 und ein zweiter Halbleiterchip 5 hergestellt.

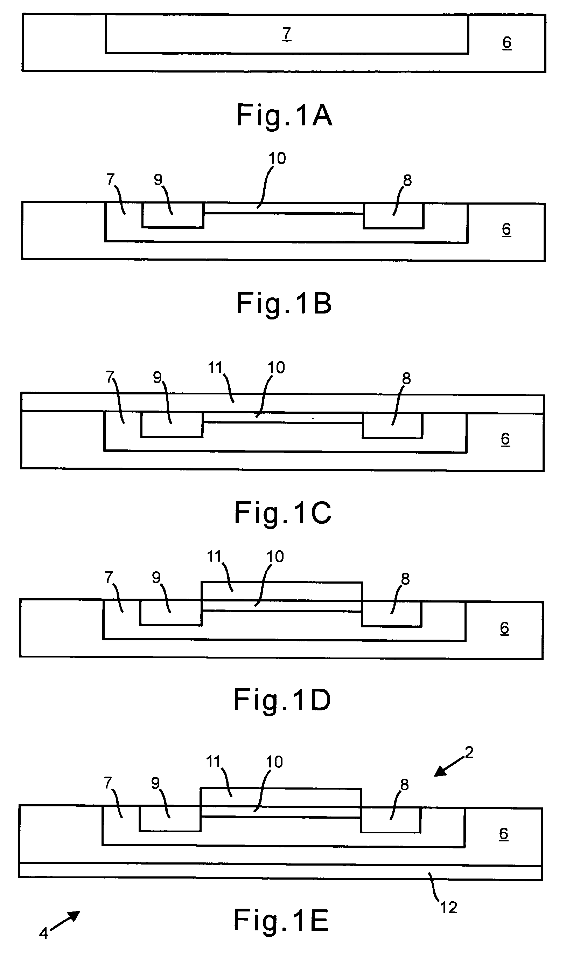

Wie in Fig. 1A erkennbar ist, wird zum Herstellen einer Vielzahl von ersten Halbleiterchips 4 ein erster Wafer bereitgestellt, der ein in der Zeichnung nur teilweise dargestelltes erstes Halbleitersubstrat 6 aufweist. In die Vorderseite des ersten Halbleitersubstrat 6 wird für jeden ersten Halbleiterchip 4 jeweils eine erste Transistorwanne 7 eingebracht, die mit Ladungsträgern eines ersten Ladungsträgertyps dotiert ist. Die ersten Transistorwannen 7 können beispielsweise durch Beschuss des ersten Halbleitersubstrats 6 mit Ionen erzeugt werden.

In jede der ersten Transistorwanne 7 werden in einem weiteren Verfahrensschritt jeweils eine erste Drain 8 und eine erste Source 9 eingebracht, die mit Ladungsträgern eines zweiten Ladungsträgertyps dotiert sind (Fig. 1 B). Zwischen der ersten Drain 8 und der ersten Source 9 ist jeweils ein erster Kanalbereich 10 gebildet. Auf die ersten Kanalbereiche 10 wird eine in der Zeichnung nicht näher dargestellte dielektrische Isolationsschicht aufgebracht.

Zum Erzeugen einer der Anzahl der ersten Halbleiterchips 4 entsprechenden Anzahl erster gassensitiver Schichten 11 wird in einem weiteren Verfahrensschritt die Vorderseite des Halbleitersubstrats 6 ganzflächig mit Palladium beschichtet (Fig. 1 C). Das Palladium kann beispielsweise durch stromloses galvanisches Abscheiden auf das Halbleitersubstrat 6 aufgetragen werden. Danach wird das Palladium an den Stellen, an denen die ersten gassensitiven Schichten 11 nicht sein sollen, vom Halbleitersubstrat 6 entfernt (Fig. 1 D). In den ersten Wafer ist nun eine der Anzahl der herzustellenden ersten Halbleiterchips 4 entsprechende Anzahl Lundström-FET 2 integriert.

Nun wird die den ersten gassensitiven Schichten 11 abgewandte Rückseite des ersten Wafers von allen im Verlauf der Fertigung der Lundström-FET 2 eventuell entstandenen Schichten befreit, indem in einer oberflächennahen Schicht Material von der Rückseite des Wafers abgetragen wird. Das Material kann durch einen Schleifprozess abgetragen werden.

Danach wird auf die der ersten gassensitiven Schicht 11 abgewandte Rückseite des ersten Wafers ganzflächig eine zweite gassensitive Schicht 12 aufgebracht, die auf eine Änderung der Konzentration des zu detektierenden Gases mit einer Änderung ihrer Austrittsarbeit reagiert (Fig. 1 E). Die zweite gassensitive Schicht kann beispielsweise aus Platin bestehen.

Dann werden die einzelnen ersten Halbleiterchips 4 aus dem ersten Wafer herausgetrennt, indem dieser beispielsweise entlang vorbestimmter Trennlinien zersägt und/oder zerbrochen wird.

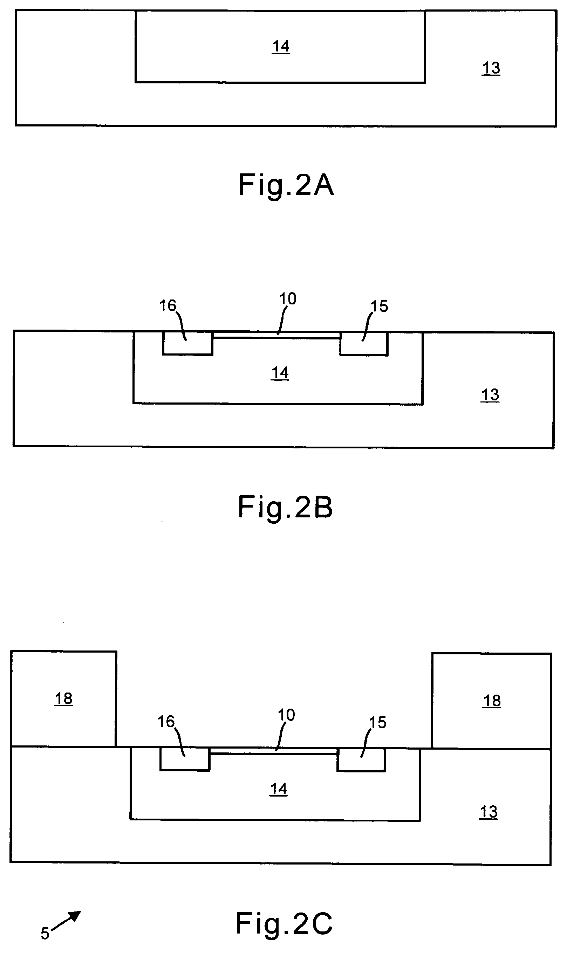

Wie in Fig. 2A erkennbar ist, wird zum Herstellen einer Vielzahl von zweiten Halbleiterchips 5 ein zweiter Wafer bereitgestellt, der ein in der Zeichnung nur teilweise dargestelltes zweites Halbleitersubstrat 13 aufweist

In die Vorderseite des zweiten Halbleitersubstrats 13 wird für jeden zweiten Halbleiterchip 5 jeweils eine zweite Transistorwanne 14 eingebracht, die mit Ladungsträgern des ersten Ladungsträgertyps dotiert ist. Die zweiten Transistorwannen 14 können beispielsweise durch Beschuss des zweiten Halbleitersubstrats 13 mit Ionen erzeugt werden.

In jede der zweiten Transistorwanne 14 werden in einem weiteren Verfahrensschritt jeweils eine zweite Drain 15 und eine zweite Source 16 eingebracht, die mit Ladungsträgern des zweiten Ladungsträgertyps dotiert sind (Fig. 2B). Zwischen der zweiten Drain 15 und der zweiten Source 16 ist jeweils ein zweiter Kanalbereich 17 gebildet.

In einem weiteren Verfahrensschritt werden seitlich neben den zweiten Transistorwannen 14 Zwischenlagen 18 aufgebracht, die über Oberfläche des zweiten Halbleitersubstrats 13 überstehen.

Dann werden die einzelnen zweiten Halbleiterchips 5 aus dem zweiten Wafers herausgetrennt, indem dieser beispielsweise entlang vorbestimmter Trennlinien zersägt und/oder zerbrochen wird.

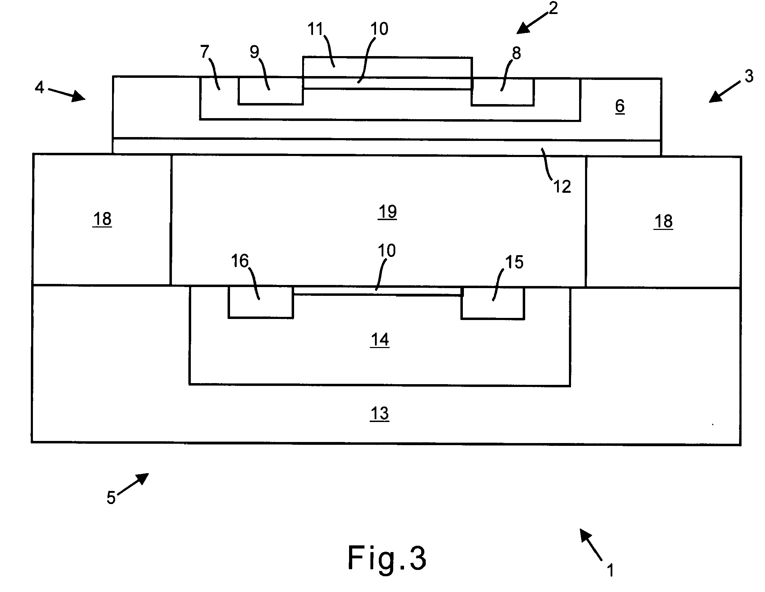

Nun werden ein erster Halbleiterchip 4 und ein zweiter Halbleiterchip 5 derart relativ zueinander positioniert, dass die an dem ersten Halbleiterchip 4 vorgesehene zweite gassensitive Schicht 12 dem zweiten Kanalbereich 17 zugewandt und über einen Luftspalt 19 kapazitiv an diesen gekoppelt (Fig. 3). Dabei kommt die zweite gassensitive Schicht 12 auf den Zwischenlagen 18 zur Anlage.

Dann werden der erste Halbleiterchip 4 und der zweite Halbleiterchip 5 durch einen Bondschritt miteinander verbunden und relativ zueinander fixiert, so dass die beiden Halbleiterchips 4, 5 den SGFET 3 bilden.

Erwähnt werden soll noch, dass die erste Drain 8 und die erste Source 9 über erste Leiterbahnen mit in der Zeichnung nicht näher dargestellten ersten Anschlusskontakten verbunden sind. Für jeden ersten Anschlusskontakt hat der zweite Halbleiterchip 5 einen Gegenkontakt, der über einen Bonddraht mit einem ihm zugeordneten Anschlusskontakt verbunden ist. Die Gegenkontakte sind über zweite Leiterbahnen mit einer in der Zeichnung nicht näher dargestellten Auswerteeinrichtung verbunden, die in den zweiten Halbleiterchip 5 integriert ist. Über weitere Leiterbahnen ist die Auswerteeinrichtung mit der zweiten Drain 15 und die zweiten Source 16 verbunden.

Die Vorrichtung 1 kann auch einen Lundström-FET 2 und einen CCFET 20 aufweisen, die übereinander angeordnet sind. Zum Herstellen einer solchen Vorrichtung werden wiederum ein erster Halbleiterchip 4 und ein zweiter Halbleiterchip 5' hergestellt. Die Verfahrensschritte für die Herstellung des ersten Halbleiterchips 4 stimmen mit denen des Verfahrens zur Herstellung einer Vorrichtung, die einen Lundström-FET 2 und einen SGFET 3 aufweist überein, weshalb bezüglich dieser Verfahrensschritte auf die Fig. 1A bis 1E und die zugehörige Beschreibung verwiesen wird.

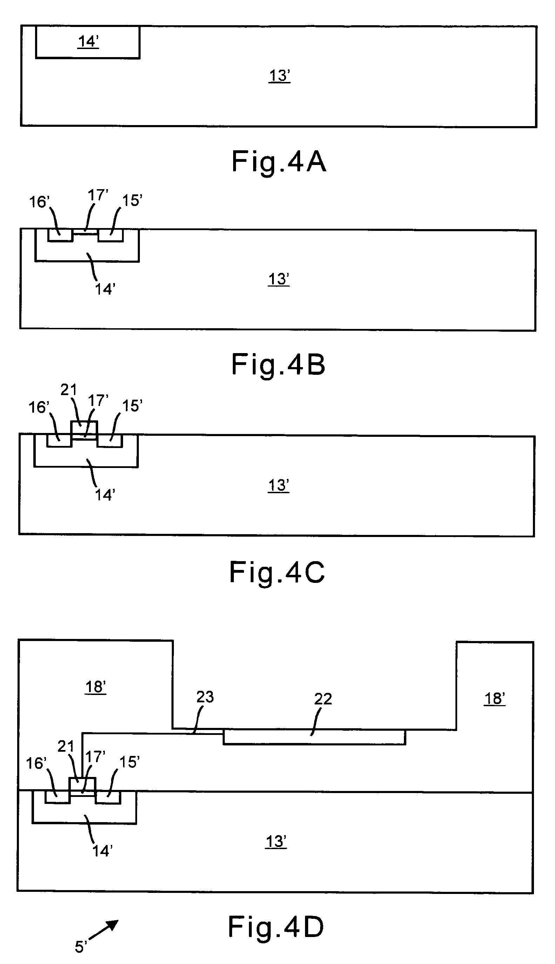

Wie in Fig. 4A erkennbar ist, wird zum Herstellen einer Vielzahl von zweiten Halbleiterchips 5' ein zweiter Wafer bereitgestellt, der ein in der Zeichnung nur teilweise dargestelltes zweites Halbleitersubstrat 13' aufweist.

In die Vorderseite des zweiten Halbleitersubstrats 13' wird für jeden zweiten Halbleiterchip 5' jeweils eine zweite Transistorwanne 14' eingebracht, die mit Ladungsträgern des ersten Ladungsträgertyps dotiert ist. Die zweiten Transistorwannen 14' können beispielsweise durch Beschuss des zweiten Halbleitersubstrats 1 3' mit Ionen erzeugt werden.

In jede der zweiten Transistorwannen 14' werden in einem weiteren Verfahrensschritt jeweils eine zweite Drain 15' und eine zweite Source 16' eingebracht, die mit Ladungsträgern des zweiten Ladungsträgertyps dotiert sind (Fig. 4B). Zwischen der zweiten Drain 15' und der zweiten Source 16' ist jeweils ein zweiter Kanalbereich 17' gebildet.

Nun wird auf den zweiten Kanalbereich 17' eine in der Zeichnung nicht näher dargestellte elektrische Isolationsschicht und auf diese eine Gateelektrode 21 aufgebracht (Fig. 4C).

In einem weiteren Verfahrensschritt wird die so erhaltene Anordnung mit einer Zwischenlage 18' beschichtet, auf die für jeden zweiten Halbleiterchip 5' jeweils eine von der Gateelektrode 21 des betreffenden zweiten Halbleiterchips 5' beabstandete Sensorelektrode 22 aufgebracht wird, die über eine Leiterbahn elektrisch mit der ihr zugeordneten Gateelektrode 21 verbunden ist. In Fig. 4D ist erkennbar, dass die Zwischenlage 18' jeweils beidseits der Sensorelektrode 22 Überstände aufweist, die über die Sensorelektrode 22 überstehen.

Nun werden die einzelnen zweiten Halbleiterchips 5' aus dem zweiten Wafer herausgetrennt, indem dieser beispielsweise entlang vorbestimmter Trennlinien zersägt und/oder zerbrochen wird.

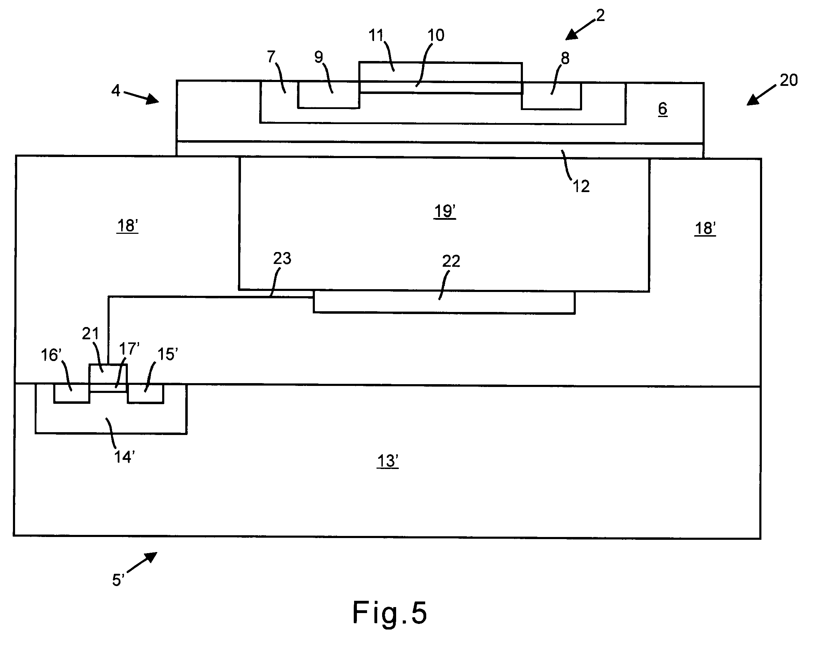

In einem weiteren Verfahrensschritt werden ein erster Halbleiterchip 4 und ein zweiter Halbleiterchip 5' derart relativ zueinander positioniert, dass die an dem ersten Halbleiterchip 4 vorgesehene zweite gassensitive Schicht 12 der Sensorelektrode 22 zugewandt und über einen Luftspalt 19' kapazitiv an diese gekoppelt ist (Fig. 5). Dabei kommt die zweite gassensitive Schicht 12 an den Überständen der Zwischenlage 18' zur Anlage.

Dann werden der erste Halbleiterchip 4 und der zweite Halbleiterchip 5' durch einen Bondschritt miteinander verbunden und relativ zueinander fixiert, so dass die beiden Halbleiterchips 4, 5' den CCFET 3 bilden.

Für jeden ersten Anschlusskontakt des ersten Halbleiterchips 4 hat der zweite Halbleiterchip 5' einen Gegenkontakt, der über einen Bonddraht mit einem Anschlusskontakt verbunden ist. Die Gegenkontakte sind über zweite Leiterbahnen mit einer in der Zeichnung nicht näher dargestellten Auswerteeinrichtung verbunden, die in den zweiten Halbleiterchip 5' integriert ist. Über weitere Leiterbahnen ist die Auswerteeinrichtung mit der zweiten Drain 15' und die zweiten Source 16' verbunden.

In Fig. 5 ist noch erkennbar, dass der zweite Kanalbereich 17' in dem zweiten Halbleitersubstrat 13' seitlich neben der zweiten gassensitiven Schicht 12 bzw. seitlich neben dem Luftspalt 19 angeordnet ist. Der zweite Halbleiterchip 5' hat eine größer Chipfläche als der erste Halbleiterchip 4 und steht seitlich über diesen über.

## Patentansprüche

1. Verfahren zum Herstellen einer Vorrichtung (1) zur Detektion eines Gases oder Gasgemischs,
- wobei ein erster Halbleiterchip (4) hergestellt wird, indem
- ein erstes Halbleitersubstrat (6) bereitgestellt wird,
- an der Vorderseite des ersten Halbleitersubstrats (6) eine erste Drain (8), eine erste Source (9), ein dazwischen befindlicher erster Kanalbereich (10) und eine erste gassensitive Schicht (11) gebildet werden, die Palladium enthält und mit einer Änderung ihrer Austrittsarbeit auf eine Änderung der Konzentration des zu detektierenden Gases reagiert,
- wobei der erste Kanalbereich (10) und die erste gassensitive Schicht (11) derart angeordnet werden, dass die erste gassensitive Schicht (11) kapazitiv an den ersten Kanalbereich (10) gekoppelt ist,
- die Rückseite des ersten Halbleitersubstrats (6) mit einer zweiten gassensitiven Schicht (12) beschichtet wird, die mit einer Änderung ihrer Austrittsarbeit auf eine Änderung der Konzentration des zu detektierenden Gases reagiert,
- wobei ein zweiter Halbleiterchip (5) hergestellt wird, indem
- ein zweites Halbleitersubstrat (13) bereitgestellt wird,
- auf dem eine zweite Drain (15), eine zweite Source (16) und ein dazwischen befindlicher zweiter Kanalbereich (17) gebildet werden,
wobei der erste Halbleiterchip (4) und der zweite Halbleiterchip (5) derart relativ zueinander positioniert werden, dass die zweite gassensitive Schicht (12) dem zweiten Kanalbereich (17) zugewandt und über einen Luftspalt (18) kapazitiv an diesen gekoppelt ist, und wobei der erste Halbleiterchip (4) und der zweite Halbleiterchip (5) in dieser Lage relativ zueinander fixiert werden.

2. Verfahren zum Herstellen einer Vorrichtung (1) zur Detektion eines Gases oder Gasgemischs,
- wobei ein erster Halbleiterchip (4) hergestellt wird, indem
- ein erstes Halbleitersubstrat (6) bereitgestellt wird,
- an der Vorderseite des ersten Halbleitersubstrats eine erste Drain (8), eine erste Source (9), ein dazwischen befindlicher erster Kanalbereich (10) und eine erste gassensitive Schicht (11) gebildet werden, die Palladium enthält und mit einer Änderung ihrer Austrittsarbeit auf eine Änderung der Konzentration des zu detektierenden Gases reagiert,
- wobei der erste Kanalbereich (10) und die erste gassensitive Schicht (11) derart angeordnet werden, dass die erste gassensitive Schicht (11) kapazitiv an den ersten Kanalbereich (10) gekoppelt ist,
- die Rückseite des ersten Halbleitersubstrats (6) mit einer zweiten gassensitiven Schicht (12) beschichtet wird, die mit einer Änderung ihrer Austrittsarbeit auf eine Änderung der Konzentration des zu detektierenden Gases reagiert,
- wobei ein zweiter Halbleiterchip (5') hergestellt wird, indem
- ein zweites Halbleitersubstrat (13') bereitgestellt wird,
- auf dem eine zweite Drain (15'), eine zweite Source (16') und ein dazwischen befindlicher zweiter Kanalbereich (17') gebildet werden,
- auf diesem eine kapazitiv an den zweiten Kanalbereich (17') gekoppelte, gegen den zweiten Kanalbereich (17') elektrisch isolierte Gateelektrode (21) und eine von der Gateelektrode (21) seitlich beabstandete Sensorelektrode (22) gebildet werden, die elektrisch mit der Gateelektrode (21) verbunden wird,
wobei der erste Halbleiterchip (4) und der zweite Halbleiterchip (5') derart relativ zueinander positioniert werden, dass die zweite gassensitive Schicht (12) der Sensorelektrode (22) zugewandt und über einen Luftspalt (19') kapazitiv an diese gekoppelt ist, und wobei der erste Halbleiterchip (4) und der zweite Halbleiterchip (5') in dieser Lage relativ zueinander fixiert werden.

3. Verfahren nach Anspruch 1 oder 2, **dadurch gekennzeichnet, dass** das erste Halbleitersubstrat (6) ganzflächig mit dem das Palladium enthaltenden Werkstoff der ersten gassensitiven Schicht (12) beschichtet wird und der Werkstoff danach an Stellen, an denen die erste gassensitive Schicht (11) nicht sein soll, von der Oberfläche des ersten Halbleitersubstrats (6) entfernt wird.

4. Verfahren Anspruch 3, **dadurch gekennzeichnet, dass** vor dem Beschichten des ersten Halbleitersubstrats (6) mit der ersten gassensitiven Schicht (11) auf dem ersten Kanalbereich (10) eine Struktur erzeugt wird, an welcher der Werkstoff der ersten gassensitiven Schicht (11) besser haftet als an einem Oberflächenbereich des ersten Halbleitersubstrats (6), der diese Struktur nicht aufweist, und dass nach dem Beschichten des ersten Halbleitersubstrats (6) mit dem Werkstoff dieser in dem die Struktur nicht aufweisenden Oberflächenbereich von dem Oberflächenbereich entfernt wird.

5. Verfahren nach einem der Ansprüche 1 bis 4, **dadurch gekennzeichnet, dass** nach dem Beschichten des ersten Halbleitersubstrats (6) mit der ersten gassensitiven Schicht (11) an der Rückseite des ersten Halbleitersubstrats (6) flächig Material abgetragen wird, und dass die Rückseite danach mit der zweiten gassensitiven Schicht (12) beschichtet wird.

6. Verfahren nach einem der Ansprüche 1 bis 5, **dadurch gekennzeichnet, dass** in das zweite Halbleitersubstrat (13, 13') eine Auswerteeinrichtung integriert wird, die über Bondrähte oder dergleichen elektrische Verbindungen mit der ersten Drain (8) und/oder der ersten Source (9) sowie über Leiterbahnen mit der zweiten Drain (15, 15') und/oder der zweiten Source (16, 16') verbunden wird.

7. Verfahren nach einem der Ansprüche 1 bis 6, **dadurch gekennzeichnet, dass** eine Vielzahl der ersten Halbleiterchips (4) auf einem ersten Wafer erzeugt und die ersten Halbleiterchips (4) danach vereinzelt werden, dass eine Vielzahl der zweiten Halbleiterchips (5, 5') auf einem zweiten Wafer erzeugt und die zweiten Halbleiterchips (5, 5') danach vereinzelt werden, und dass die ersten Halbleiterchips (4) und die zweiten Halbleiterchips (5, 5') danach jeweils relativ zueinander positioniert und miteinander verbunden werden.

8. Verfahren nach einem der Ansprüche 1 bis 7, **dadurch gekennzeichnet, dass** auf dem ersten Halbleitersubstrat (6) mindestens ein elektrisches Heizelement und/oder wenigstens ein Temperatursensor integriert wird.

9. Vorrichtung (1) zur Detektion eines Gases oder Gasgemischs, mit einem ersten und einem zweiten Gassensor, wobei der erste Gassensor ein MOS-FET ist, der eine erste Source (9), eine erste Drain (8), einen zwischen diesen befindlichen ersten Kanalbereich (10) und eine kapazitiv an den ersten Kanalbereich (10) gekoppelte erste gassensitive Schicht (11) aufweist, die Palladium enthält und mit einer Änderung ihrer Austrittsarbeit auf eine Änderung der Konzentration des zu detektierenden Gases reagiert, wobei der zweite Gassensor in einem Halbleitersubstrat (13) eine zweite Source (16, 16'), eine zweite Drain (17, 17') und zwischen diesen einen zweiten Kanalbereich (17, 17') hat, der über einen Luftspalt (19, 19') kapazitiv an ein Suspended Gate gekoppelt ist, das eine zweite gassensitive Schicht (12) aufweist, die mit einer Änderung ihrer Austrittsarbeit auf eine Änderung der Konzentration des zu detektierenden Gases reagiert, wobei die zweite gassensitive Schicht (12) an einer Trägerschicht angeordnet und dem Luftspalt (19, 19') zugewandt ist, **dadurch gekennzeichnet, dass** die Trägerschicht durch ein weiteres Halbleitersubstrat (6) gebildet ist, und dass der erste Gassensor in die dem Luftspalt (19, 19') abgewandte Vorderseite des weiteren Halbleitersubstrats (6) integriert ist.

10. Vorrichtung (1) nach Anspruch 9, **dadurch gekennzeichnet, dass** der zweite Gassensor ein SGFET ist, bei dem der Luftspalt (19) zwischen dem zweiten Kanalbereich (17) und der zweiten gassensitiven Schicht (12) gebildet ist.

11. Vorrichtung (1) nach Anspruch 9, **dadurch gekennzeichnet, dass** der zweite Gassensor ein CCFET ist, der eine auf dem zweiten Kanalbereich (17') angeordnete Gateelektrode (21) und eine seitlich davon beabstandete Sensorelektrode (22) aufweist, die elektrisch mit der Gateelektrode (21) verbunden ist, wobei der Luftspalt (19') zwischen der Sensorelektrode (22) und der zweiten gassensitiven Schicht (12) gebildet ist.

12. Vorrichtung (1) nach einem der Ansprüche 9 bis 11, **dadurch gekennzeichnet, dass** der erste Gassensor und der zweite Gassensor mit einer Auswerteeinrichtung verbunden sind, die derart ausgebildet ist, dass sie zur Detektion des Gases oder Gasgemischs die Messsignale des ersten Gassensors und des zweiten Gassensors auswertet, und dass die Auswerteeinrichtung vorzugsweise in das Halbleitersubstrat (13) des zweiten Gassensors integriert ist.

13. Vorrichtung (1) nach einem der Ansprüche 9 bis 12, **dadurch gekennzeichnet, dass** das Gas Wasserstoffgas, Ammoniak oder Stickstoffdioxid ist oder das Gasgemisch Wasserstoffgas, Ammoniak und/oder Stickstoffdioxid enthält.

14. Vorrichtung (1) nach einem der Ansprüche 9 bis 1 3, **dadurch gekennzeichnet, dass** die erste gassensitive Schicht (11) aus Palladium und/oder Platin und/oder einer mindestens eines dieser Metalle enthaltenden Legierung besteht.

15. Vorrichtung (1) nach einem der Ansprüche 8 bis 1 3, **dadurch gekennzeichnet, dass** in das weitere Halbleitersubstrat (6) mindestens ein elektrisches Heizelement und/oder wenigstens ein Temperatursensor integriert wird.

## Claims

1. Method of manufacturing a device (1) for detecting a gas or gas mixture,
- wherein a semiconductor chip (4) is produced, in that
- a first semiconductor substrate (6) is provided,
- a first drain (8), a first source (9), a first channel region (10) disposed therebetween and a first gas-sensitive layer (11), which contains palladium and which reacts by a change in its work function to a change in the concentration of the gas to be detected, are formed at the front side of the first semiconductor substrate (6),
- wherein the first channel region (10) and the first gas-sensitive layer (11) are so arranged that the first gas-sensitive layer (11) is capacitively coupled to the first channel region (10), and
- the rear side of the first semiconductor substrate (6) is coated with a second gas-sensitive layer (12) which reacts by a change in its work function to a change in the concentration of the gas to be detected,
- wherein a second semiconductor chip (5) is produced, in that
- a second semiconductor substrate (13) is provided,
- on which a second drain (15), a second source (16) and a second channel region (17) disposed therebetween are formed,
wherein the first semiconductor chip (4) and the second semiconductor chip (5) are so positioned relative to one another that the second gas-sensitive layer (12) faces the second channel region (17) and is capacitively coupled thereto by way of an air gap (18) and wherein the first semiconductor chip (4) and the second semiconductor chip (5) are fixed relative to one another in this position.

2. Method of manufacturing a device (1) for detecting a gas or gas mixture,
- wherein a semiconductor chip (4) is produced, in that
- a first semiconductor substrate (6) is provided,
- a first drain (8), a first source (9), a first channel region (10) disposed therebetween and a first gas-sensitive layer (11), which contains palladium and which reacts by a change in its work function to a change in the concentration of the gas to be detected, are formed at the front side of the first semiconductor substrate (6),
- wherein the first channel region (10) and the first gas-sensitive layer (11) are so arranged that the first gas-sensitive layer (11) is capacitively coupled to the first channel region (10), and
- the rear side of the first semiconductor substrate (6) is coated with a second gas-sensitive layer (12) which reacts by a change in its work function to a change in the concentration of the gas to be detected,
- wherein a second semiconductor chip (5') is produced, in that
- a second semiconductor substrate (13') is provided,
- on which a second drain (15'), a second source (16') and a second channel region (17') disposed therebetween are formed, and
- a gate electrode (21), which is capacitively coupled to the second channel region (17') and electrically insulated relative to the second channel region (17'), and a sensor electrode (22), which is laterally spaced from the gate electrode (21) and electrically connected with the gate electrode (21), are formed on the second channel region,
wherein the first semiconductor chip (4) and the second semiconductor chip (5') are so positioned relative to one another that the second gas-sensitive layer (12) faces the sensor electrode (22) and is capacitively coupled thereto by way of an air gap (19') and wherein the first semiconductor chip (4) and the second semiconductor chip (5') are fixed relative to one another in this position.

3. Method according to claim 1 or 2, **characterised in that** the first semiconductor substrate (6) is coated over the whole area with the material, which contains the palladium, of the first gas-sensitive layer (12) and the material is thereafter removed from the surface of the first semiconductor substrate (6) at places at which the first gas-sensitive layer (11) should not be present.

4. Method according to claim 3, **characterised in that** before coating the first semiconductor substrate (6) with the first gas-sensitive layer (11) a structure to which the material of the first gas-sensitive layer (11) adheres better than to a surface region, which does not have this structure, of the first semiconductor substrate (6) is produced on the first channel region (10) and that after coating the first semiconductor substrate (6) with the material this is removed, in the surface region not having the structure, from the surface region.

5. Method according to any one of claims 1 to 4, **characterised in that** after coating the first semiconductor substrate (6) with the first gas-sensitive layer (11) area material is removed at the rear side of the first semiconductor substrate (6) and that the rear side is thereafter coated with the second gas-sensitive layer (12).

6. Method according to any one of claims 1 to 5, **characterised in that** an evaluating device, which is connected with the first drain (8) and/or the first source (9) by way of bonding wires or like electrical connections and connected with the second drain (15, 15') and/or the second source (16, 16') by way of conductor tracks, is integrated in the second semiconductor substrate (13, 13').

7. Method according to any one of claims 1 to 6, **characterised in that** a plurality of the first semiconductor chips (4) is produced on a first wafer and the first semiconductor chips (4) are thereafter separated, a plurality of the second semiconductor chips (5, 5') is produced on a second wafer and the second semiconductor chips (5, 5') are thereafter separated and the first semiconductor chips (4) and the second semiconductor chips (5, 5') are thereafter respectively positioned relative to one another and connected together.

8. Method according to any one of claims 1 to 7, **characterised in that** at least one electrical heating element and/or at least one temperature sensor is or are integrated on the first semiconductor substrate (6).

9. Device (1) for detecting a gas or gas mixture, comprising a first and a second gas sensor, wherein the first gas sensor is a MOSFET, which comprises a first source (9), a first drain (8), a first channel region (10) disposed therebetween and a first gas-sensitive layer (11), which is capacitively coupled to the first channel region (10) and contains palladium and which reacts by a change in its work function to a change in the concentration of the gas to be detected, wherein the second gas sensor has, in a semiconductor substrate (13), a second source (16, 16'), a second drain (17, 17') and therebetween a second channel region (17, 17') which is capacitively coupled by way of an air gap (19, 19') to a suspended gate, which comprises a second gas-sensitive layer (12) which reacts by a change in its work function to a change in the concentration of the gas to be detected, wherein the second gas-sensitive layer (12) is arranged on a carrier layer and faces the air gap (19, 19'), **characterised in that** the carrier layer is formed by a further semiconductor substrate (6) and that the first gas sensor is integrated in the front side, which is remote from the air gap (19, 19'), of the further semiconductor substrate (6).

10. Device (1) according to claim 9, **characterised in that** the second gas sensor is an SGFET, in which the air gap (19) is formed between the second channel region (17) and the second gas-sensitive layer (12).

11. Device (1) according to claim 9, **characterised in that** the second gas sensor is a CCFET, which comprise a gate electrode (21), which is arranged on the second channel region (17'), and a sensor electrode (22), which is laterally spaced therefrom and which is electrically connected with the gate electrode (21), wherein the air gap (19') is formed between the sensor electrode (22) and the second gas-sensitive layer (12).

12. Device (1) according to any one of claims 9 to 11, **characterised in that** the first gas sensor and the second gas sensor are connected with an evaluating device, which is so constructed that it evaluates the measurement signals of the first gas sensor and the second gas sensor for detection of the gas or gas mixture and that the evaluating device is preferably integrated in the semiconductor substrate (13) of the second gas sensor.

13. Device (1) according to any one of claims 9 to 12, **characterised in that** the gas is hydrogen gas, ammonia or nitrogen dioxide or the gas mixture contains hydrogen gas, ammonia and/or nitrogen dioxide.

14. Device (1) according to any one of claims 9 to 13, **characterised in that** the first gas-sensitive layer (11) consists of palladium and/or platinum and/or at least one alloy containing these metals.

15. Device (1) according to any one of claims 8 to 13, **characterised in that** at least one electrical heating element and/or at least one temperature sensor is or are integrated in the further semiconductor substrate (6).

## Revendications

1. Procédé de fabrication d'un dispositif (1) pour la détection d'un gaz ou d'un mélange de gaz,
- dans lequel on fabrique une première puce à semi-conducteur (4), par le fait qu'
- on prépare un premier substrat semi-conducteur (6),
- on forme sur la face avant du premier substrat semi-conducteur (6) un premier drain (8), une première source (9), une première région de canal (10) se trouvant entre ceux-ci et une première couche sensible au gaz (11) qui contient du palladium et qui réagit par une variation de son travail de sortie à une variation de la concentration du gaz à détecter,
- dans lequel on agence la première région de canal (10) et la première couche sensible au gaz (11) de telle manière que la première couche sensible au gaz (11) soit couplée de façon capacitive à la première région de canal (10),
- on recouvre la face arrière du premier substrat semi-conducteur (6) avec une deuxième couche sensible au gaz (12) qui réagit par une variation de son travail de sortie à une variation de la concentration du gaz à détecter,
- dans lequel on fabrique une deuxième puce à semi-conducteur (5), par le fait que
- on prépare un deuxième substrat semi-conducteur (13),
- sur lequel on forme un deuxième drain (15), une deuxième source (16) et une deuxième région de canal (17) se trouvant entre ceux-ci,
dans lequel on positionne la première puce à semi-conducteur (4) et la deuxième puce à semi-conducteur (5) l'une par rapport à l'autre de telle manière que la deuxième couche sensible au gaz (12) soit tournée vers la deuxième région de canal (17) et soit couplée à celle-ci de façon capacitive par l'intermédiaire d'un entrefer (18) et dans lequel on fixe la première puce à semi-conducteur (4) et la deuxième puce à semi-conducteur (5) dans cette position l'une par rapport à l'autre.

2. Procédé de fabrication d'un dispositif (1) pour la détection d'un gaz ou d'un mélange de gaz,
- dans lequel on fabrique une première puce à semi-conducteur (4), par le fait qu'
- on prépare un premier substrat semi-conducteur (6),
- on forme sur la face avant du premier substrat semi-conducteur un premier drain (8), une première source (9), une première région de canal (10) se trouvant entre ceux-ci et une première couche sensible au gaz (11) qui contient du palladium et qui réagit par une variation de son travail de sortie à une variation de la concentration du gaz à détecter,
- dans lequel on agence la première région de canal (10) et la première couche sensible au gaz (11) de telle manière que la première couche sensible au gaz (11) soit couplée de façon capacitive à la première région de canal (10),
- on recouvre la face arrière du premier substrat semi-conducteur (6) avec une deuxième couche sensible au gaz (12) qui réagit par une variation de son travail de sortie à une variation de la concentration du gaz à détecter,
- dans lequel on fabrique une deuxième puce à semi-conducteur (5'), par le fait que
- on prépare un deuxième substrat semi-conducteur (13'),
- sur lequel on forme un deuxième drain (15'), une deuxième source (16') et une deuxième région de canal (17') se trouvant entre ceux-ci,
- on forme sur celui-ci une électrode de grille (21) couplée de façon capacitive à la deuxième région de canal (17') et électriquement isolée de la deuxième région de canal (17') et une électrode de capteur (22) espacée latéralement de l'électrode de grille (21) qui est électriquement reliée à l'électrode de grille (21),
dans lequel on positionne la première puce à semi-conducteur (4) et la deuxième puce à semi-conducteur (5') l'une par rapport à l'autre de telle manière que la deuxième couche sensible au gaz (12) soit tournée vers l'électrode de capteur (22) et soit couplée à celle-ci de façon capacitive par l'intermédiaire d'un entrefer (19'), et dans lequel on fixe la première puce à semi-conducteur (4) et la deuxième puce à semi-conducteur (5') dans cette position l'une par rapport à l'autre.

3. Procédé selon la revendication 1 ou 2, **caractérisé en ce que** l'on recouvre le premier substrat semi-conducteur (6) sur toute la surface avec le matériau contenant du palladium de la première couche sensible au gaz (12) et on enlève ensuite le matériau de la surface du premier substrat semi-conducteur (6) aux endroits où la première couche sensible au gaz (11) ne doit pas être présente.

4. Procédé selon la revendication 3, **caractérisé en ce qu'**avant de recouvrir le premier substrat semi-conducteur (6) avec la première couche sensible au gaz (11), on forme sur la première région de canal (10) une structure sur laquelle le matériau de la première couche sensible au gaz (11) adhère mieux que sur une région de surface du premier substrat semi-conducteur (6) qui ne présente pas cette structure et **en ce qu'**après le recouvrement du premier substrat semi-conducteur (6) avec le matériau, on enlève celui-ci de la région de surface dans la région de surface qui ne présente pas la structure.

5. Procédé selon l'une quelconque des revendications 1 à 4, **caractérisé en ce qu'**après le recouvrement du premier substrat semi-conducteur (6) avec la première couche sensible au gaz (11), on enlève du matériau en surface sur la face arrière du premier substrat semi-conducteur (6) et **en ce que** l'on recouvre ensuite la face arrière avec la deuxième couche sensible au gaz (12).

6. Procédé selon l'une quelconque des revendications 1 à 5, **caractérisé en ce que** l'on intègre dans le deuxième substrat semi-conducteur (13, 13') un dispositif d'évaluation, que l'on relie par des fils de liaison ou des raccordements électriques analogues au premier drain (8) et/ou à la première source (9) ainsi que par des pistes conductrices au deuxième drain (15, 15') et/ou à la deuxième source (16, 16').

7. Procédé selon l'une quelconque des revendications 1 à 6, **caractérisé en ce que** l'on produit une multiplicité de la première puce à semi-conducteur (4) sur une première galette et on isole ensuite les premières puces à semi-conducteur (4) **en ce que** l'on produit une multiplicité des deuxièmes puces à semi-conducteur (5, 5') sur une deuxième galette et on isole ensuite les deuxièmes puces à semi-conducteur (5, 5') et **en ce que** l'on positionne ensuite les premières puces à semi-conducteur (4) et les deuxièmes puces à semi-conducteur (5, 5') respectivement les unes par rapport aux autres et on les relie les unes aux autres.

8. Procédé selon l'une quelconque des revendications 1 à 7, **caractérisé en ce que** l'on intègre sur le premier substrat semi-conducteur (6) au moins un élément chauffant électrique et/ou au moins un détecteur de température.

9. Dispositif (1) pour la détection d'un gaz ou d'un mélange de gaz avec un premier et un deuxième détecteur de gaz dans lequel le premier détecteur de gaz est un MOSFET, qui présente une première source (9), un premier drain (8), une première région de canal (10) se trouvant entre ceux-ci et une première couche sensible au gaz (11) couplée de façon capacitive à la première région de canal (10), qui contient du palladium et qui réagit par une variation de son travail de sortie à une variation de la concentration du gaz à détecter, dans lequel le deuxième détecteur de gaz comprend dans un substrat semi-conducteur (13) une deuxième source (16, 16'), un deuxième drain (17, 17') et, entre ceux-ci, une deuxième région de canal (17, 17'), qui est couplée de façon capacitive par l'intermédiaire d'un entrefer (19, 19') à une grille suspendue qui présente une deuxième couche sensible au gaz (12), qui réagit par une variation de son travail de sortie à une variation de la concentration du gaz à détecter dans lequel la deuxième couche sensible au gaz (12) est disposée sur une couche de support et est tournée vers l'entrefer (19, 19'), **caractérisé en ce que** la couche de support est formée par un autre substrat semi-conducteur (6) et **en ce que** le premier détecteur de gaz est intégré dans la face avant de l'autre substrat semi-conducteur (6) détournée de l'entrefer (19, 19').

10. Dispositif (1) selon la revendication 9, **caractérisé en ce que** le deuxième détecteur de gaz est un SGFET dans lequel l'entrefer (19) est formé entre la deuxième région de canal (17) et la deuxième couche sensible au gaz (12).

11. Dispositif (1) selon la revendication 9, **caractérisé en ce que** le deuxième détecteur de gaz est un CCFET qui présente une électrode de grille (21) agencée sur la deuxième région de canal (17') et une électrode de capteur (22) espacée latéralement de celle-ci qui est électriquement reliée à l'électrode de grille (21) dans lequel l'entrefer (19') est formé entre l'électrode de capteur (22) et la deuxième couche sensible au gaz (12).

12. Dispositif (1) selon l'une quelconque des revendications 9 à 11, **caractérisé en ce que** le premier détecteur de gaz et le deuxième détecteur de gaz sont reliés à un dispositif d'évaluation qui est configuré de telle manière que, pour la détection du gaz ou du mélange de gaz, il évalue les signaux de mesure du premier détecteur de gaz et du deuxième détecteur de gaz et **en ce que** le dispositif d'évaluation est de préférence intégré dans le substrat semi-conducteur (13) du deuxième détecteur de gaz.

13. Dispositif (1) selon l'une quelconque des revendications 9 à 12, **caractérisé en ce que** le gaz est l'hydrogène gazeux, l'ammoniac et/ou le dioxyde d'azote ou le mélange de gaz contient de l'hydrogène gazeux, de l'ammoniac et/ou du dioxyde d'azote.

14. Dispositif (1) selon l'une quelconque des revendications 9 à 13, **caractérisé en ce que** la première couche sensible au gaz (11) se compose de palladium et/ou de platine et/ou d'un alliage contenant au moins l'un de ces métaux.

15. Dispositif (1) selon l'une quelconque des revendications 8 à 13, **caractérisé en ce qu'**au moins un élément chauffant électrique et/ou au moins un détecteur de température est intégré dans l'autre substrat semi-conducteur (6).
